# EUROPÄISCHE PATENTANMELDUNG

(11) **EP 0 991 013 A1**
(43) Veröffentlichungstag der Anmeldung: **05.04.2000**
(21) Anmeldenummer: 98810975.7
(22) Anmeldetag: 28.09.1998
(51) Int. Cl.: G06K 19/077

(54) **Vorrichtung zum Zuordnen einer Information zu einer stückförmigen Ware**

(71) Anmelder: Cafag S.A., 1701 Fribourg (CH)
(72) Erfinder: Häusler, Thomas, 1700 Fribourg (CH)
(74) Vertreter: AMMANN PATENTANWAELTE AG BERN

(57) **Zusammenfassung**

Vorrichtung zum Zuordnen einer Information zu einer stückförmigen Ware. Um relevante und möglichst aktuelle und vielseitige Information über jedes Warenstück an verschiedenen Stellen der Vertriebskanäle selektiv verfügbar zu machen enthält die Vorrichtung folgende Komponenten:
(a) eine Verpackungseinheit (20) für jedes Warenstück (17),
(b) einen Datenträger (21), der als Träger von Information über eines der Warenstücke vorgesehen ist,
(c) eine Schreibeinheit (13) zum kontaktfreien Schreiben eines Datensatzes in den Datenträger (21),
(d) eine Leseeinheit (16) zum kontaktfreien Abfragen der auf dem Datenträger enthaltenen Daten, und
(e) Verbindungsmittel, mit deren Hilfe der Datenträger (21) an der Verpackungseinheit (20) so befestigt ist, dass er von ausserhalb dieser Einheit (20) unsichtbar und nicht ohne Hinterlassung von Spuren von dieser Einheit (20) entfernbar oder auswechselbar ist.

## Beschreibung

Die Erfindung betrifft eine Vorrichtung und ein Verfahren zum Zuordnen einer Information zu einer stückförmigen Ware entsprechend dem Oberbegriff der unabhängigen Ansprüche.

Es ist heute allgemein Stand der Technik, zur Kennzeichnung von Waren aussen an diesen bzw. an ihrer Verpackung einen kontaktlosen, ablesbaren Code, insbesondere einen optisch lesbaren Barcode anzubringen. Dies erlaubt vor allem an den Kassierkassen ein schnelles und fehlerfreies Lesen z.B. des Warenpreises. Weiter kann dabei aber auch beispielsweise die Lagerhaltung beeinflusst werden, indem die erfassten Daten unmittelbar an einen zentralen Computer weitergegeben werden, der für die Organisation des Geschäftsbetriebs zuständig ist.

Es sind weiter andere kontaktlos ablesbare Datenträger unter der Bezeichnung Transponder bekannt. Diese besitzen beispielsweise eine Spulenantenne und einen elektronischen Speicher-Chip, welche Einheiten durch einen aktiven Schreiboder Lesegerät aktiviert und beeinflusst werden können, wahlweise zum Schreiben oder Auslesen zahlreicher Daten.

Aus der Schrift US-A-5 566 441 ist es bekannt, einen solchen Transponder mit dem Karton eines Verpackungsmaterials zu verbinden bzw. den Transponder durch verschiedene Herstellungsschritte auf dem Karton aufzubauen.

Der Erfindung liegt die Aufgabe zugrunde, weitere Anwendungen von kontaktlos ablesbaren Datenträgern in Kombination mit Einrichtungen des Warenvertriebs anzugeben.

Die erfindungsgemässe Lösung dieser Aufgabe wird durch den kennzeichnenden Teil der unabhängigen Ansprüche angegeben. Die abhängigen Ansprüche geben Ausgestaltungen und Varianten der Erfindung an.

Mit der vorliegenden Erfindung werden bedeutende organisatorische Vorteile für die Warenhersteller und die Vertriebsfirmen und hieraus resultierende Einsparungen erzielt, z.B. indem relevante Produktinformation nicht mehr wie bisher üblich in Papierform in einer Vielzahl von Sprachen geliefert werden muss, obwohl der Endabnehmer nur eine dieser Sprachen versteht. Für die Waren-Endabnehmer ergeben sich ebenfalls Vorteile, z.B. indem er die jeweils aktuellsten Version der für ihn relevante Information beim Kauf der Ware erhält und dies bevorzugt in der Sprache, die er am besten versteht. Solche Informationen sind beispielsweise Gebrauchsanleitungen bei technischen Geräten, Gebrauchshinweise bei Medikamenten (bisher als Beipackzettel den Medikamentenverpackungen beigegeben), Ursprungsbescheinigungen bei Luxusgütern, Garantiebescheinigungen, etc.

Im Folgenden wird die Erfindung anhand von zwei Figuren beispielsweise näher beschrieben. Es zeigen:
Fig. 1 schematische Blockdarstellung für den erfindungsgemässen Vertrieb einer stückartigen Ware,
Fig. 2 Explosionsdarstellung einer erfindungsgemässen Verpackungsschachtel.
Fig. 3 zeigt eine schematische Ansicht der Basis 31 einer erfindungsgemässen Verpackungseinheit.
Fig. 4 zeigt eine schematische Ansicht eines Warenstücks 33, welche in der Basis 31 angeordnet ist und eine Schreibeinheit 34.
Fig. 5 zeigt eine schematische Ansicht einer kompletten Verpackungseinheit 30.

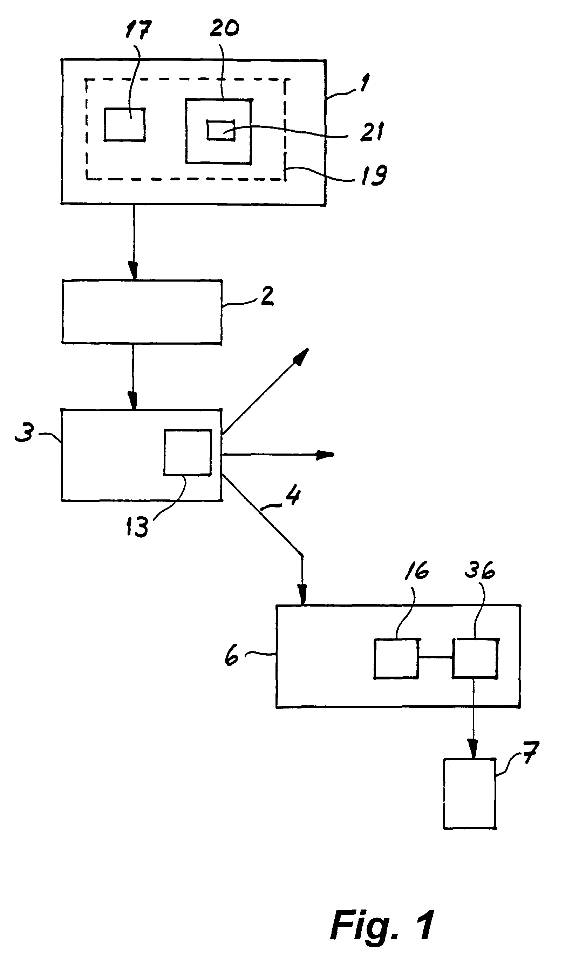

Figur 1 zeigt eine schematische Blockdarstellung für den Vertrieb einer stückartigen Ware, beispielsweise von Luxusgütern wie Parfümflaschen oder Schmuckuhren in aufwendigen Einzelverpackungen.

Der Verpackungshersteller liefert Einzelverpackungen 20, wobei jede dieser Verpackungen - wie nachstehend beschrieben - mit einem Transponder versehen ist, dessen Speicherchip unbeschrieben ist, und welcher nicht entfernt oder ausgewechselt werden kann, ohne dass dabei unverwischbare Spuren entstehen, d. h. die Verpackung 20 wird dabei beschädigt.

Jeder der Warenstücke 17 wird beim Hersteller der Waren oder bei einem von ihm beauftragten Abpacker in einer solchen Einzelverpackung 20 verpackt. Auf diese Weise werden Handelseinheiten 19 gebildet, welche anschliessend in ein Lager 2 überführt werden, von dem sie nach Bedarf zum Versand 3 abrufbar sind. Im Versand 4 werden die Handelseinheiten 19 chargenweise für die Spedition über die diversen Vertriebswege 4 zusammengestellt. Vorzugsweise unmittelbar vor dem Versand wird mit Hilfe einer Schreibeinheit 13 jedem Warenstück 17 ein individueller Datensatz beigefügt, der beispielsweise eine Chargennummer, das Versanddatum, die Versandadresse usw. umfasst. Die Schreibeinheit 13 aktiviert hierzu kontaktlos die in der Verpackung 20 der Handelseinheit 19 enthaltenen Transponder 21, die in ihrem Speicher-Chip 22 diesen Datensatz dauerhaft speichern. Wenn zweckmässig ist es bei speziellen Anwendungen auch möglich, das soeben erwähnte Schreibvorgang, welcher unmittelbar vor dem Versand der Ware statt findet, mit zusätzlichen Schreibvorgängen zu ergänzen, die zu anderen Zeitpunkten statt finden können.

Sobald eine Handelseinheit 19 über den vom Versand 3 vorgesehenen Vertriebsweg 4 ein Einzelhandelsgeschäft 6 ordnungsgemäss erreicht hat und dort an einen Endverbraucher verkauft wird, kann vom Geschäft mit Hilfe einer Leseeinheit 16 der zugeordnete Datensatz aus dem Speicher-Chip 22 des Transponders 21 ausgelesen werden. Dieser Datensatz dient dann zum Beispiel zum Erstellen eines Dokumentes 7 für den Kunden, beispielsweise ein Garantie- oder Ursprungszertifikat, ein Wareninformationspapier oder eine Gebrauchsanweisung. Ein solches Dokument wird mit einem Drucker 36 ausgedruckt, welcher mit der Leseeinheit 16 verbunden ist.

Sofern die Handelseinheiten 19 ihren vom Versand 3 vorgesehenen Vertriebsweg 4 nicht ordnungsgemäss zurücklegen und beispielsweise bei vorgesehenem Export in ein anderes Land durch Rückimport unerwünscht auf dem Heimmarkt des Herstellers 1 erscheinen, kann durch Lesen des den Handelseinheiten 19 beigegebenen Datensatzes jederzeit deren Identifikation und hieraus mit erheblicher Wahrscheinlichkeit die Umleitungsstelle im Vertriebsweg 4 ermittelt werden.

Wird vom Endverbraucher umfangreichere Information benötigt, beispielsweise eine Gebrauchsanleitung im Falle eines technischen Gerätes oder Hinweise über die Indikationen, Nebenwirkungen, Zusammensetzung usw. im Falle eines Medikaments, so lässt sich diese Information im Einzelhandelsgeschäft 6 mit dem Drucker 36 ausdrucken.

Hierbei kann aus einer Mehrzahl von Sprachen diejenige ausgewählt werden, die der Kunde am besten versteht.

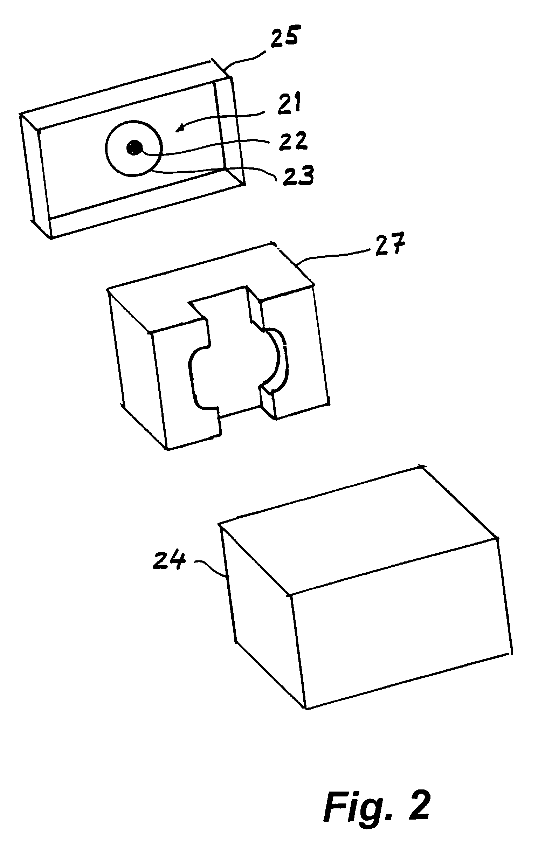

In Figur 2 ist in Explosionsdarstellung eine Verpackungsschachtel 20 für eine Parfümflasche dargestellt. Diese Schachtel 20 umfasst einen Deckel 24 mit Beschriftung aus gestanztem und gefalteten Karton, ein Bodenteil 25, ebenfalls aus Karton und ein inneres Führungsteil 27, beispielsweise ein tiefgezogenes Kunststoffelement mit stoffartigem Überzug. Das Führungsteil 27 ist fix mit dem Bodenteil 25 verbunden, insbesondere verklebt. Im Zwischenraum zwischen dem Führungsteil 27 und dem Bodenteil 25 ist der vorgefertigte Transponder 21 angeordnet, bevorzugt ebenfalls verklebt, wobei der Klebstoff vorzugsweise ein Kontaktkleber ist.

Dieser handelsübliche Transponder 21 ist als flaches Element mit einer flachen, ringförmigen Spulenantenne 20 ausgerüstet, die den Speicher-Chip 22 kreisförmig umgibt. Im montierten und verklebten Zustand der Verpackung 20 ist der Transponder 21 in keinem Gebrauchszustand der Handelseinheit 19 von Aussen sichtbar oder zugänglich. Der Transponder 21 kann daher weder entfernt oder ausgewechselt werden, ohne die Verpackung 20 unübersehbar zu verletzen. Der Transponder kann weiter als Schutz gegen unerwünschtes Manipulieren des gespeicherten Datensatzes mit einem Schreib- und/oder Leseschutz ausgestattet sein.

Die beschriebene Vorrichtung weist als Herzstück den bei mässigem Aufwand weder elektrisch noch mechanisch unerlaubt manipulierbaren Transponder 21 auf. Dieser Transponder ist generell an der Verpackung 20 von Aussen unsichtbar angeordnet und als Bestandteil der Handelseinheit 19 dem verpackten Warenstück 17 fest zugeordnet. Hierdurch lässt sich diesem Warenstück 17 eine Information bzw. ein Datensatz individuell zugeordneten. Der Datensatz kann unter anderem zur Überwachung der Vertriebswege 4 dienen.

Für den Hersteller 1 und den Versand 3 wird die Lagerhaltung massiv vereinfacht, da die Handelseinheiten 19 in Verpackungen 20 gelagert werden, welche mit Transponder versehen sind, deren Speicher vorerst unbeschriebenen sind. Die Speicherung der geeigneten Datensätze in den Speichern der Transponder erfolgt erst zum Zeitpunkt des Versands.

Die Vorrichtung ist besonders vorteilhaft in Verbindung mit Luxusgütern und deren aufwendiger Verpackung, insbesondere Verpackungen aus Fein- und Luxus-Kartonagen, Faltschachteln aus Karton und Papier, aber auch aus Kunststoff, Wellpappe oder Holz. Derartige Verpackungen 20 sind im Wesentlichen undurchsichtig, so dass der in ihnen befestigte Transponder 21 von Aussen nicht sichtbar ist und den werbenden, ästhetischen Eindruck der Handelseinheit 19 in keiner Weise beeinflusst. Weiter sind derartige Verpackungen 20 so gestaltbar beispielsweise durch Ausbildung von blockierenden Widerhaken, dass ihnen das jeweilige Warenstück 17 nicht ohne weiteres direkt entnehmbar ist, wie beispielsweise Getränkeflaschen einem zugeordneten Gebinde. Die leichte Entnehmbarkeit kann zusätzlich durch eine Versiegelung der Verpackung 20 weiter eingeschränkt sein.

Die Befestigung des Transponders 21 im Inneren der Verpackung erfolgt mit Vorteil durch Verkleben, insbesondere mittels eines Kontaktklebers. Diese Verklebung kann während des Faltens und des Zusammenbaus der Verpackungseiheit 20 erfolgen oder auch nach Fertigstellung dieser Einheit 20. Andere Befestigungsarten können beispielsweise Klammern oder Nieten sein. Insgesamt ist bei der Befestigung des Transponders 21 darauf zu achten, dass eine weitgehende Richtungsunabhängigkeit für das Zusammenwirken mit der Schreibeinheit 13 und der Leseeinheit 16 gegeben ist.

Für die Auswahl des Transponders 21 gilt, dass dieser vorgefertigt ist und eine erhebliche Speicherkapazität aufweist, z. B. eine Kapazität von mehreren hundert bis etwa 1000 Bit. Weiter ist die Reichweite für das fehlerfreie Zusammenwirken beim Schreiben und Lesen wichtig.

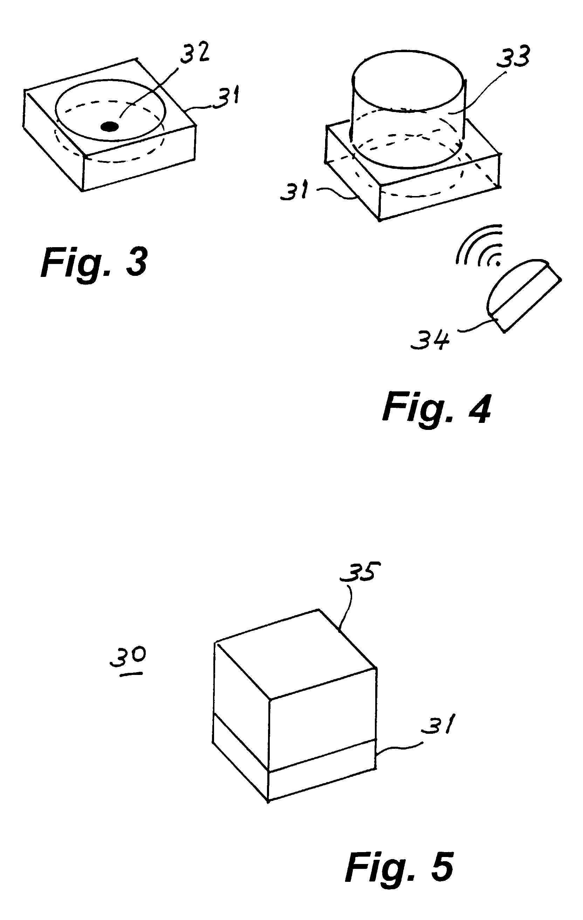

Eine weitere Ausführungsform einer erfindungsgemässen Verpackungseinheit 30 wird nachstehend anhand der Figuren 3 bis beschrieben. Fig. 3 zeigt eine schematische Ansicht der Basis 31 einer erfindungsgemässen Verpackungseinheit. In dieser Ansicht wird der Datenträger 32 ohne die dazugehörige Abdeckung dargestellt, die ihn unsichtbar macht. Fig. 4 zeigt eine schematische Ansicht eines Warenstücks 33, welche in der Basis 31 angeordnet ist und eine Schreibeinheit 34 mit dem einen Datensatz in den Datenträger 32 geschrieben wird. Fig. 5 zeigt eine schematische Ansicht einer kompletten Verpackungseinheit 30, welche die Basis 31 gemäss Fig. 3 und das Warenstück 33 enthält und durch einen Deckel 35 geschlossen ist.

Die erfindungsgemässe Lösung lässt sich nicht nur auf verpackte Warenstücke anwenden, sondern auch auf graphische Produkte, wie z.B. Bücher oder Landkarten. Eine dafür geignete erfindungsgemässe Vorrichtung enthält folgende Komponenten:
(a) einen auf jeden Warenstück oder auf einem damit verbundenen Substrat befestigten Datenträger (21), der als Träger von Information über eines der Warenstücke vorgesehen ist,
(b) eine Schreibeinheit (13) zum kontaktfreien Schreiben eines Datensatzes in den Datenträger (21),
(c) einer Leseeinheit (16) zum kontaktfreien Abfragen der auf dem Datenträger (21) enthaltenen Daten, und
(d) Verbindungsmittel vorgesehen sind, mit deren Hilfe der Datenträger (21) an dem Warenstück oder an dem damit verbundenen Substrat Verpackungseinheit (20) so befestigt ist, dass er von ausserhalb des Warenstücks unsichtbar und nicht ohne Hinterlassung von Spuren von diesem Warenstück entfernbar oder auswechselbar ist.

Ein erfindungsgemässes Verfahren zum Zuordnen von Information zu einer stückförmigen Ware, insbesondere einen graphischen Produkt, unter Verwendung eines Datenträgers (21), einer Schreibeinheit (13) zum kontaktfreien Schreiben eines Datensatzes in den Datenträger (21) und einer Leseeinheit (16) zum kontaktfreien Abfragen der auf dem Datenträger enthaltenen Daten, umfasst folgenden Schritte:
- in einem ersten Schritt wird der Datenträger (21) mit dem Warenstück so vereinigt, dass er von ausserhalb des Warenstücks unsichtbar und nicht ohne Hinterlassung von Spuren von diesem Warenstück entfernbar oder auswechselbar ist
- vor dem Versenden des Warenstücks (17) wird in einem zweiten Schritt ein dem Warenstück individuell zugeordneter Datensatz kontaktfrei in den Datenträger (21) mittels einer Schreibeinheit (13) eingespeichert, und
- beim Verkauf des Warenstücks (17) an einen Endverbraucher wird in einem dritten Schritt wenigstens einen Teil des gespeicherten Datensatzes aus dem Datenträger ausgelesen und für den Endverbraucher lesbar ausgedruckt.

## Patentansprüche

1. Vorrichtung zum Zuordnen einer Information zu einer stückförmigen Ware, dadurch gekennzeichnet, dass sie folgende Komponenten umfasst
(a) eine Verpackungseinheit (20) für jedes Wärenstück (17),
(b) einen Datenträger (21), der als Träger von Information über eines der Warenstücke vorgesehen ist,
(c) eine Schreibeinheit (13) zum kontaktfreien Schreiben eines Datensatzes in den Datenträger (21),
(d) eine Leseeinheit (16) zum kontaktfreien Abfragen der auf dem Datenträger enthaltenen Daten, und
(e) Verbindungsmittel, mit deren Hilfe der Datenträger (21) an der Verpackungseinheit (20) so befestigt ist, dass er von ausserhalb dieser Einheit (20) unsichtbar und nicht ohne Hinterlassung von Spuren von dieser Einheit (20) entfernbar oder auswechselbar ist.

2. Vorrichtung nach Anspruch 1,
dadurch gekennzeichnet,
dass die Verpackungseinheit (20) als Feinkartonage oder als Faltschachtel ausgebildet ist.

3. Vorrichtung nach Anspruch 1 oder 2, dadurch gekennzeichnet, dass die Verpackungseinheit (20) so ausgebildet ist, dass ihr das Warenstück (17) nicht unmittelbar entnehmbar ist.

4. Vorrichtung nach einem der vorangehenden Ansprüchen 1-3, dadurch gekennzeichnet, dass der Datenträger (21) ein vorgefertigter Transponder mit integriertem Halbleiter-Chip (22) ist.

5. Vorrichtung nach einem der vorangehenden Ansprüchen 1-4, dadurch gekennzeichnet, dass die Verbindungsmittel schnell wirkende Klebstoffe umfassen, mit deren Hilfe der Datenträger im wesentlichen starr an der Innenseite der Verpackungseinheit (20) festgeklebt ist.

6. Verfahren zum Zuordnen einer Information zu einem in einer Verpackungseinheit (20) enthaltenen Warenstück (17) unter Verwendung eines Datenträgers (21), einer Schreibeinheit (13) zum kontaktfreien Schreiben eines Datensatzes in den Datenträger (21) und einer Leseeinheit (16) zum kontaktfreien Abfragen der auf dem Datenträger enthaltenen Daten,
dadurch gekennzeichnet,
- dass in einem ersten Schritt der Datenträger (21) mit der Verpackungseinheit (20) so vereinigt wird, dass er von ausserhalb dieser Einheit (20) unsichtbar und nicht ohne Hinterlassung von Spuren von dieser Einheit (20) entfernbar oder auswechselbar ist,
- dass vor dem Versenden des in der Verpackungseinheit (20) verpackten Warenstücks (17) in einem zweiten Schritt ein dem Warenstück individuell zugeordneter Datensatz kontaktfrei in den Datenträger (21) mittels einer Schreibeinheit (13) eingespeichert wird, und
- dass beim Verkauf des Warenstücks (17) samt Verpackungseinheit (20) an einen Endverbraucher in einem dritten Schritt wenigstens einen Teil des gespeicherten Datensatzes aus dem Datenträger ausgelesen und für den Endverbraucher lesbar ausgedruckt wird.

7. Verfahren nach Anspruch 6, dadurch gekennzeichnet, dass die Information in einer vom Endverbraucher gewählten Sprache ausgedruckt wird.

8. Verfahren nach Anspruch 6, dadurch gekennzeichnet, dass die Information Angaben enthält, die der Endverbraucher bei der Benutzung des gekauften Warenstücks (17) benötigt und/oder beachten muss.

9. Vorrichtung zum Zuordnen einer Information zu einer stückförmigen Ware, insbesondere einem graphischen Produkt, dadurch gekennzeichnet, dass sie folgende Komponenten enthält
(a) einen auf jedem Warenstück oder auf einem damit verbundenen Substrat befestigten Datenträger (21), der als Träger von Information über eines der Warenstücke vorgesehen ist,
(b) eine Schreibeinheit (13) zum kontaktfreien Schreiben eines Datensatzes in den Datenträger (21),
(c) einer Leseeinheit (16) zum kontaktfreien Abfragen der auf dem Datenträger (21) enthaltenen Daten, und
(d) Verbindungsmittel vorgesehen sind, mit deren Hilfe der Datenträger (21) an dem Warenstück oder an dem damit verbundenen Substrat Verpackungseinheit (20) so befestigt ist, dass er von ausserhalb des Warenstücks unsichtbar und nicht ohne Hinterlassung von Spuren von diesem Warenstück entfernbar oder auswechselbar ist.

10. Verfahren zum Zuordnen einer Information zu einer stückförmigen Ware, insbesondere einem graphischen Produkt, unter Verwendung eines Datenträgers (21), einer Schreibeinheit (13) zum kontaktfreien Schreiben eines Datensatzes in den Datenträger (21) und einer Leseeinheit (16) zum kontaktfreien Abfragen der auf dem Datenträger enthaltenen Daten,
dadurch gekennzeichnet,
- dass in einem ersten Schritt der Datenträger (21) mit dem Warenstück so vereinigt wird, dass er von ausserhalb des Warenstücks unsichtbar und nicht ohne Hinterlassung von Spuren von diesem Warenstück entfernbar oder auswechselbar ist
- dass vor dem Versenden des Warenstücks (17) in einem zweiten Schritt ein dem Warenstück individuell zugeordneter Datensatz kontaktfrei in den Datenträger (21) mittels einer Schreibeinheit (13) eingespeichert wird, und
- dass beim Verkauf des Warenstücks (17) an einen Endverbraucher in einem dritten Schritt wenigstens einen Teil des gespeicherten Datensatzes aus dem Datenträger ausgelesen und für den Endverbraucher lesbar ausgedruckt wird.
